Europäisches Patentamt

(19) European Patent Office

Office européen des brevets

(11) Publication number : **0 292 167 B1**

(12) **EUROPEAN PATENT SPECIFICATION**

(45) Date of publication of patent specification :
**29.01.92 Bulletin 92/05**

(21) Application number : **88304163.4**

(22) Date of filing : **09.05.88**

(51) Int. Cl.$^5$ : **B01J 27/16**, C04B 35/50

(54) Amorphous refractory composition, its synthesis and its use as a catalyst support.

(30) Priority : **18.05.87 US 50445**
**18.05.87 US 50446**

(43) Date of publication of application :
**23.11.88 Bulletin 88/47**

(45) Publication of the grant of the patent :
**29.01.92 Bulletin 92/05**

(84) Designated Contracting States :
**AT BE DE FR GB IT NL SE**

(56) References cited :
**EP-A- 0 215 336**
**FR-A- 2 315 997**
**GB-A- 2 068 251**
**US-A- 4 179 358**
**US-A- 4 228 036**
**US-A- 4 361 705**
**US-A- 4 382 877**
**US-A- 4 407 730**

(73) Proprietor : **MOBIL OIL CORPORATION**
**150 East 42nd Street**
**New York New York 10017 (US)**

(72) Inventor : **Absil, Robert Peter**
**P-311 Heather Ridge Appartments**
**Mantua New Jersey 08051 (US)**
Inventor : **Angevine, Philip Jay**
**10 Kent Court**
**West Deptford New Jersey 08051 (US)**
Inventor : **Chester, Arthur Warren**
**517 Country Club Drive**
**Cherry Hill New Jersey 08003 (US)**
Inventor : **Kirker, Garry Wayne**
**18 Old Mill Road**
**Sewell New Jersey 08080 (US)**

(74) Representative : **Colmer, Stephen Gary**
**Mobil Court 3 Clements Inn**
**London WC2A 2EB (GB)**

## Description

This invention relates to an amorphous, refractory composition, its synthesis and its use as a catalyst support for organic compound conversion reactions, particularly hydrotreating of petroleum residue.

Refractory inorganic materials have been used as catalyst supports for many different organic conversion processes. The most common material used for this purpose is alumina, but other known examples include silica, silica-alumina, clays, crystalline zeolites, oxides of zirconium, titanium, cerium, thorium, lanthanum, calcium and magnesium, and phosphates of zinc, zirconium, thorium, cerium, calcium, magnesium and aluminum.

One of the known organic conversion processes which have employed refractory inorganic catalyst supports is the removal of contaminants, particularly sulfur, nitrogen and metals, from petroleum-based stocks, for example petroleum residues. Thus it is well-known to effect contaminant removal, such as sulfur removal, from hydrocarbon stocks by subjecting them to treatment with hydrogen at elevated temperature and pressure while in contact with a catalyst containing hydrogenating components. Typically the hydrogenating components are Group VIB or VIII metals, or their oxides or sulfides, and are supported on a variety of well-known carriers, such as, for example, crystalline and amorphous refractory materials. For example, US 3546103 teaches hydrodesulfurization with a catalyst of cobalt and molybdenum sulfides on an alumina base.

U.S. 4,363,748 describes a combination of silica and aluminum-calcium-cerium phosphate as a low acid activity catalyst for oxidative dehydrogenation, whereas GB 2,068,253 discloses a combination of silica and aluminum-calcium-tungsten phosphate for a similar use. U.S. Patent 4,228,036 teaches an alumina-aluminum phosphate-silica matrix as an amorphous body to be mixed with zeolite for use as cracking catalyst.

U.S. Patent 4,382,877 describes a catalyst composition of a metal on a support containing (1) a compound of magnesium, calcium, strontium or barium, (2) alumina and (3) aluminum phosphate, the support having an average pore radius area of from 10 to 300 x $10^{-10}$ M, a surface area of from 100 to 350 $m^2$/g and a pore volume of from 0.3 to 1.5cc/g. Various combinations of metal compounds, such as calcium, strontium, barium and magnesium oxide, wih alumina and aluminum phosphate are described as catalyst supports in U.S. Patent 4,382,878.

U.S. Patent 4,376,067 describes a catalyst support containing various combinations of metal compounds, including zinc, cadmium, magnesium, calcium, strontium and barium compounds, alumina and aluminum phosphate. Magnesia-alumina-aluminum phosphate support material and its synthesis is described in U.S. Patent 4,210,560. Use of a magnesia-alumina-aluminum phosphate supported catalyst for cracking is described in U.S. Patent 4,179,358. U.S. Patent 3,755,146 describes a high surface area catalyst support material comprising alumina, silica, titania, zirconia, boria and combinations thereof.

In a first aspect, the invention resides in a refractory composition comprising an amorphous, solid, combination of a rare earth oxide, aluminum oxide and aluminum phosphate having, after calcination, a surface area of from 50$m^2$/g to 500$m^2$/g, a pore volume of from 0.3 cc/g to 1.5 cc/g, and Equilibrium Sorption capacities greater than 10 wt.% for the water vapor, greater than 6 wt.% for cyclohexane vapor and greater than 5 wt.% for n-hexane vapor, said rare earth oxide, aluminum oxide and aluminum phosphate being present in the refractory composition in the weight ratios of 10:20:70 to 90:5:5.

In a second aspect, the invention resides in a method for synthesizing a refractory composition comprising an amorphous, solid, combination of a rare earth oxide, aluminum oxide and aluminum phosphate comprising the steps of:

(i) preparing a first solution comprising a source of aluminum, a source of a rare earth metal and phosphoric acid, said sources of aluminum and rare earth metal being dissolved in a polar solvent medium, said phosphoric acid being in solution with water, and said first solution containing from 0.1 to 10 wt% aluminum, from 0.1 to 10 wt. % rare earth metal and from 0.2 to 5 wt.% phosphorus,

(ii) preparing a second basic solution having pH from 10 to 14,

(iii) mixing said first and second solutions together with agitation while maintaining the pH at from 8 to 12, and

(iv) recovering the precipitate formed during said mixing step (iii).

In a third aspect, the invention resides in a process for upgrading a petroleum residue feedstock which comprises contacting said feedstock under hydrotreating conditions with hydrogen and a catalyst composition comprising a catalytic component selected from the group consisting of metals of groups IIIB, IVB, VB, VIB, VIIB and VIII of the Periodic Table of Elements, copper, zinc and combinations thereof, and a catalyst support comprising an amorphous combination of lanthana, alumina and aluminum phosphate.

The relative proportions of components of the amorphous refractory composition of the invention are, in terms of rare earth oxide: aluminum oxide:aluminum phosphate (weight relationships), from 10:20:70 to 90:5:5, preferably from 25:20:55 to about 30:25:45.

Synthesis of the amorphous refractory composition of the invention is carried out by (1) preparing separately a first solution comprising a source of aluminum (+3 valence), a source of rare earth metal (+3 valence) and phosphoric acid, and a second basic solution; (2) mixing the first and second solutions together with agitation, e.g. stirring, while maintaining the mixture pH at from about 8 to about 12, preferably from about 8.5 to about 9.5; and (3) recovering the amorphous solid precipitate formed during step (2).

The first solution will comprise one or more sources of aluminum ($Al^{+3}$). Such sources include as suitable examples aluminum nitrate and aluminum sulfate. The first solution will also comprise one or more sources of rare earth metal ($RE^{+3}$), including as suitable examples, lanthanum nitrate, lanthanum chloride and mixed rare earths such as rare earth chlorides. Commercial sources of rare earths often comprise mixtures of such metals, e.g. the chlorides. These aluminum and rare earth metal sources are dissolved in a suitable polar solvent medium, such as water. The first solution should also comprise phosphoric acid ($H_3PO_4$), in solution with water. The composition of the first solution is preferably as follows:

| COMPONENT | WT % OF SOLUTION | | |
|---|---|---|---|
| Aluminum | 0.1 | to | 10 |
| Rare Earth metal | 0.1 | to | 10 |
| Phosphorus | 0.2 | to | 5 |

The second solution is a basic solution, preferably with a pH from 10 to 14. Suitable components of this second solution include inorganic and/or organic bases such as, for example, ammonium hydroxide, ammonia, tetraalkylammonium hydroxide and alkylamine, alkyl being methyl- ,ethyl-, propyl- ,butyl- or a mixture thereof, e.g. tetramethylammonium and n-propylamine.

It is believed that the exact composition of the second solution, i.e. the type and concentration of organic or inorganic base, affects the pore size distribution in the final synthesis product. For instance, the use of tetramethylammonium hydroxide in the second solution, as exemplified hereinafter, results in an increased percentage of pores in the $100\text{-}200 \times 10^{-10}$m diameter range when compared to use of a basic second solution having no when compared to use of a basic second solution having no tetramethylammonium hydroxide.

After calcination, the amorphous refractory composition prepared by the above method has a surface area from $50m^2/g$ to $500m^2/g$, preferably from $100m^2/g$ to $250m^2/g$; and a pore volume of 0.3cc/g to 1.5cc/g, preferably from 0.5cc/g to 1cc/g; and has an Equilibrium Sorption capacity, as hereinafter defined, greater than about 10wt.% for water, greater than about 6 wt.% for cycolohexane and greater than about 5 wt.% for n-hexane.

After calcination, the present composition has a pore size distribution such that 5 vol.% to 20 vol.% is within the pore size diameter range of $50$ to $100 \times 10^{-10}$m, 10 vol.% to 35 vol.% is within the pore size diameter range of $100$ to $150 \times 10^{-10}$m, 15 vol.% to 50 vol.% is within the pore size diameter range of $150$ to $200 \times 10^{-10}$m and 10 vol.% to 50 vol.% is within the pore size diameter range of $200$ to $400 \times 10^{-10}$m.

The amorphous, solid, refractory composition of the present invention may be used as a catalyst substrate or support in the upgrading of tar sands, bitumen, coal liquids, shale oil and petroleum residua. For instance, cobalt-molybdenum metals supported on the present refractory composition outperform conventional cobalt-molybdenum on alumina for upgrading atmospheric or vacuum resids by hydrotreatment. The present refractory composition is also useful as a support or matrix for a fluid catalytic cracking catalyst.

Catalysts comprising the refractory composition of this invention may include various catalytic metals, particularly copper, zinc and/or one or more metals of Groups IIIB (e.g. Sc, Y and La), IVB (e.g. Ti and Zr), VB (e.g. V), VIB (e.g. Cr, Mo and W), VIIB (e.g. Mn) or VIII (e.g. Fe, Co, Ni, Ru, Rh, Pd, Ir and Pt) of the Periodic Table of Elements (ACS version). Preferred metals include cobalt, molybdenum, nickel and tungsten, alone or in combination with each other or another metal of the above-listed Periodic Table groups. The catalyst conveniently comprises from 0.1 wt.% to 25 wt.%, preferably from 2 wt.% to 15 wt.%, catalytic metal.

The above metal component can be impregnated into the refractory composition of this invention or intimately physically admixed therewith. For example, where the metal component is platinum, impregnation can be effected by treating the amorphous refractory composition with a solution containing a platinum metal-containing ion. Thus, suitable platinum compounds include chloroplatinic acid, platinous chloride and various compounds containing the platinum amine complex.

The amorphous refractory composition of this invention may be at least partially dehydrated, either before or after incorporation of a catalytic metal component This can be done by heating to a temperature in the range of 200°C to 595°C in an inert atmosphere, such as air, nitrogen, etc., and at atmospheric, subatmospheric or superatmospheric pressures for between 15 minutes and 48 hours. Dehydration can also be performed at room temperature merely by placing the material in a vacuum, but a longer time is then required to effect dehydration.

The refractory composition, before or after metal incorporation, may be thermally treated prior to use in a chemical conversion process by heating at a temperature of at least 370°C for at least 1 minute and generally not longer than 20 hours. While subatmospheric pressure can be employed for the thermal treatment, atmospheric pressure is desired for reasons of convenience. The thermal treatment can be performed at any temperature up to about 925°C.

The refractory composition of this invention can, before or after catalytic metal incorporation, be shaped into a wide variety of particle sizes. Generally speaking, the particles can be in the form of a powder, a granule, or a molded product, such as an extrudate having particle size sufficient to pass through a 2 mesh (Tyler) screen and be retained on a 400 mesh (Tyler) screen. In cases where the material is molded, such as by extrusion, it can be extruded before drying or partially dried and then extruded.

When the composition of the invention is a resid hydrotreating catalyst, the hydrotreatment is conveniently carried out at a temperature of 200-600°c, a pressure of 100-5000 kPa (1-500 atmospheres), a weight hourly space velocity of from 0.05-20hr$^{-1}$ and a hydrogen/hydrocarbon mole ratio of from 1-100. Preferably, the hydrotreatment is conducted in a fixed bed downflow (e.g. trickle bed) reactor at a hydrogen partial pressure from 2860 kPa to 24250 kPa (400 psig to 3500 psig); a temperature of from 315°C to 482°C (600°F to 900°F), preferably from 357°C to 454°C (675°F to 850°F), and a liquid hourly space velocity (LHSV) of from 0.1hr$^{-1}$ to 10hr$^{-1}$.

Catalysts employing the refractory material of the invention can be used in a variety of other organic conversion processes, including demetalation of resids with reaction conditions including a temperature of from 300°C to 500°C, a pressure of 5000-20000 kPa (50 to 200 atmospheres) and a weight hourly space velocity of from 0.1 hr$^{-1}$ to 10 hr$^{-1}$; and production of methanol from synthesis gas with reaction conditions including a temperature of from 250°C to 400°C, a pressure of 1000-40000 kPa (10 to 400 atmospheres) and a gas hourly space velocity of from 0.1 hr$^{-1}$ to 10 hr$^{-1}$.

The present refractory composition can also be used as a matrix for a cracking catalyst, e.g. a zeolite having cracking activity, with beneficial results when compared to standard matrix materials for use in cracking, e.g. fluidized catalytic cracking. In such a process, the feedstock would comprise, for example, gas oils and the process conditions would include a temperature of 300°C to 600°C, a pressure of 100-1000 kPa (1 to 10 atmospheres), a weight hourly space velocity of from 0.1 hr$^{-1}$ to 10 hr$^{-1}$, and a hydrogen/hydrocarbon mole ratio of from 0 (no added hydrogen) to 10.

Natural zeolites which can be composited with the present refractory composition as matrix include gmelinite, chabazite, dachiardite, clinoptilolite, faujasite, heulandite, analcite, levynite, reionite, sodalite, cancrinite, napheline. lazurite, scolecite, natrolite, offretite, mesolite, mordenite, brewsterite, ferrierite and the like. The faujasites are preferred. suitable synthetic zeolites for this purpose include zeolites X, Y, USY, A, L, ZK-4, B, E, F, HJ, M, Q, T, W, Z, alpha, beta, ZSM-5, ZSM-11, ZSM-12, ZSM-22, ZSM-23, ZSM-35, ZSM-48, ZSM-50, ZSM-57 and ZSM-58.

The zeolite is composited with the present matrix at from 5 to 50 wt.%, preferably from 5 to 35 wt.%, based on the weight of said matrix. The method for forming the final composited catalyst does not form a part of this invention, and any method well known to those skilled in the art is acceptable. For example, finely-divided zeolite can be admixed with finely-divided refractory composition and the mixture spray dired using conventional methods to form the final catalyst.

In order to more fully illustrate the nature of the invention and the manner of practicing same, the following examples, with all "parts" by weight, are presented. In the examples, and throughout the specification, the sorption data given are equilibrium sorbtion capacities for water, cyclohexane and/or n-hexane, and are determined as follows:

A weighed sample of the calcined adsorbant (calcined at 538°C for 6 hours) was positioned in an adsorption chamber, evacuated to 0.135 kPa (1 mm Hg), and contacted with 1.6 kPa (12 mm Hg) of water vapor or 2.7 kPa (20 mm Hg) of n-hexane, or cyclohexane vapor, pressures less than the vapor-liquid equilibrium pressure of the respective adsorbate at room temperature. The pressure was kept constant (within about ± 0.5 mm [67 Pa] by addition of adsorbate vapor controlled by a manostat during the adsorption period, which did not exceed about 8 hours. As adsorbate was adsorbed by the adsorbant, the decrease in pressure caused the manostat to open a valve which admitted more adsorbate vapor to the chamber to restore the above control pressures. Sorption was complete when the pressure change was insufficient to activate the manostat. The increase in weight was calculated as the adsorption capacity of the sample in g/100g of calcined adsorbant.

Example 1

A first solution of aluminum (3+) and lanthanum (3+) in phosphoric acid was prepared as follows. Twenty-six parts of Al(NO$_3$)$_3$ · 9H$_2$O were dissolved in 68 parts of distilled water and the resultant solution was mixed with 6 parts of La(NO$_3$)$_3$ · 6H$_2$O dissolved in 68 parts of distilled water. A solution of 4 parts of 85 wt.% H$_3$PO$_4$ was added to the La-Al solution. The solution was thoroughly mixed and no solids were formed at this stage.

A second solution was prepared in a separate vessel by dissolving 27 parts of 29.9% $NH_3$ solution in 27 parts of distilled water.

A precipitation procedure was then carried out by slowly adding the first and second solutions simultaneously to a medium of 68 parts of distilled water with rapid mechanical stirring. The pH was maintained as close to 9.0 as possible at all times. The entire procedure was carried out at room temperature. After the precipitation was complete, the white slurry obtained was stirred for an additional 5 minutes, filtered rapidly, washed with distilled water and dried at 121°C (250°F) overnight. The recovered dry cake was calcined for 3 hours in flowing nitrogen at 538°C (1000°F) and in air for an additional 3 hours.

Stoichiometries used in the synthesis of this example are presented in Table 1, hereinafter.

## Example 2

The same lanthanum-aluminum-phosphoric acid first solution as in Example 1 was prepared. The second solution used was commercial (Southwestern Analytical Chemicals) tetramethylammonium hydroxide, 25 wt.%. The same precipitation procedure as in Example 1 was followed. The recovered dry cake was calcined as in Example 1.

Stoichiometries used in the synthesis of this example are presented hereinafter in Table 1.

## Example 3

The same lanthanum-aluminum-phosphoric acid first solution as in Example 1 was prepared. The second solution used was prepared by dissolving 51 parts of 29% parts $NH_3$ in 68 parts of distilled water and adding 20 parts of n-propylamine. The precipitation procedure followed was the same as in Example 1 with 13 parts of the base solution left unused. The product recovered after drying at 121°C (250°F) was calcined as in Example 1.

Stoichiometries used in the synthesis of this example are also presented in Table 1.

## TABLE 1

| Example | Mole Percent | | | | | | pH |
|---|---|---|---|---|---|---|---|
| | La | Al | P | $NH_4OH$ | TMAOH | NPA | |
| 1 | 1.9 | 9.5 | 4.9 | 83.7 | --- | --- | 9 |
| 2 | 3.8 | 18.8 | 9.8 | --- | 67.6 | --- | 9 |
| 3 | 2.5 | 12.4 | 6.5 | 57.2 | --- | 21.4 | 9 |

## Example 4

Samples of the calcined products from Examples 1, 2 and 3 were submitted for elemental and physical property analyses. Results of these analyses are presented below in Table 2.

TABLE 2

Chemical and Physical Properties

| Example | 1 | 2 | 3 |
|---|---|---|---|
| **Analysis, wt.%** | | | |
| $La_2O_3$ | 27.8 | 28.0 | 29.2 |
| $Al_2O_3$ | 41.7 | 41.9 | 41.1 |
| $P_2O_5$ | 28.26 | 28.81 | 26.79 |
| Ash | 99.30 | 98.07 | 98.77 |
| **BET Surface Area, $m^2/g$** | 192 | 184 | 158 |
| **Pore Vol, cc/g** | | | |
| $N_2$ | 0.93 | 0.79 | 0.99 |
| Hg | 1.01 | 0.74 | ---- |
| **Pore Size Distribution, % Pore Volume in Pores of** | | | |
| 0-30 x $10^{-10}$ m Diameter | 0.3 | 0.0 | 0.0 |
| 30-50 | 2.0 | 1.2 | 0.7 |
| 50-100 | 10.9 | 11.4 | 9.8 |
| 100-150 | 20.5 | 31.8 | 23.6 |
| 150-200 | 21.7 | 44.1 | 23.4 |
| 200-400 | 36.6 | 11.3 | 35.7 |
| 400-600 | 8.0 | 0.2 | 6.9 |
| **Sorptions, wt.%** | | | |
| $H_2O$ | 11.7 | 11.5 | 10.4 |
| $C_y-C_6$ | 9.3 | 8.1 | 7.4 |
| $n-C_6$ | 6.3 | 5.7 | 6.3 |

Example 5

Samples of the Example 1 and 2 products were impregnated with 10 wt.% $MoO_3$ and 3.5 wt.% CoO. The impregnated catalysts were, subsequently, sulfided and evaluated for metals, sulfur, CCR and asphaltene removal in shaker bomb experiments with Arab Light vacuum resid with the following properties:

Elemental Analysis (wt.%)

| | |
|---|---|
| Hydrogen | 10.68 |
| Sulfur | 3.93 |
| Nitrogen | 0.31 |
| CCR | 16.96 |
| Asphaltenes | 10.93 |

Metal Analysis (ppm)

| | |
|---|---|
| Nickel | 16 |
| Vanadium | 65 |
| Iron | 12 |

Sodium        6

Kinematic Viscosity (cs)

212°F (100°C)    496.2
300°F(149°C)     24.6

Shaker bomb testing has been shown to very closely simulate the resid upgrading activities observed in continuous downflow units [see S.M. Oleck and H.S. Sherry, Fresh Water Manganese Nodules As A Catalyst For Demetallizing and Desulfurizing Petroleum Residua, Ind. Eng. Chem., Process Des. Dev., 16 (4), 525 (1977)]. A conventional shaker bomb apparatus is shown in J.W. Payne, C.W. Streed, and E.R. Kent, The Shaker Bonb - A New Laboratory Tool for Studying Thermal Processes, Ind. Eng. Chem., 50 (1), 47 (1958).

The Shaker bomb experiments were conducted at an oil/catalyst weight ratio of 20/l, a temperature of 400°C (750°F), and a hydrogen pressure of 14000 kPa (2000 psig), with reaction time controlled to be 80 minutes.

At the conclusion of each run, the catalyst and oil were separated and the oil was submitted for analysis. The effectiveness of each catalyst for resid upgrading was determined by comparing the degree of demetalation, desulfurization, CCR removal, etc., to that observed in an identical mn in which a conventional CoMo/Al$_2$O$_3$ catalyst was used. Properties of the CaMo/Al$_2$O$_3$ catalyst are given in Table 3. Thermal contributions were determined from a blank run at identical conditions but with no catalyst present.

In Table 4 the results of the catalyst activity study are listed. At equivalent mesh sizes, the CoMo-impregnated catalysts of this invention have greater demetallation activity than the conventional CoMo/Al$_2$O$_3$ catalyst (62% and 57% vs 49%). In addition, sulfur removal activities of the present catalysts are better (43% and 41% vs 36%). Nickel levels in the treated products actually increase due to contamination that can be traced back to the stainless steel walls of the shaker bombs.

The simultaneous increases in demetalation and sulfur removal activities were unexpected, since often, with other catalysts, an increase in the demetalation activity often occurs at the apparent expense of the sulfur removal activity.

## TABLE 3

### CoMo/Al$_2$O$_3$ Resid Demetalation Catalyst Properties

| Metal Loading, wt.% | |
|---|---|
| MoO$_3$ | 12.5 |
| CoO | 3.5 |

| Physical Properties | |
|---|---|
| Surface Area, m$^2$/g | 109 |
| Real Density, g/cc | 3.629 |
| Particle Density, g/cc | 1.221 |
| Pore Volume, cc/g | 0.543 |
| Avg. Pore Dia., Angstroms $(10^{-10}m)$ | 199 |

| Pore Size Distribution, % Pore Volume in Pores of | |
|---|---|
| 0-30 Angstrom Diameter $(10^{-10}m)$ | 14 |
| 30-50 | 1 |
| 50-80 | 1 |
| 80-100 | 2 |
| 100-150 | 23 |
| 150-200 | 37 |
| 200-300 | 13 |
| 300+ | 9 |

## TABLE 4

### Comparison of Resid Upgrading CoMo-Impregnated Catalyst Performance

| Catalyst Support | None (Thermal) | Al₂O₃ | Al₂O₃ | Example 1 | Example 2 |
|---|---|---|---|---|---|
| Mesh Size | -- | 1/32" (0.8mm) | 14-30 | 14-30 | 14-30 |
| **Liquid Product Analysis** | | | | | |
| Hydrogen, wt.% | 10.58 | 10.69 | 10.88 | 12.03 | 11.09 |
| Sulfur, wt.% | 3.47 | 2.52 | 2.52 | 2.25 | 2.31 |
| Nitrogen, wt.% | 0.32 | 0.26 | 0.26 | 0.27 | 0.24 |
| Vanadium, ppm | 70 | 40 | 33 | 25 | 28 |
| Nickel, ppm | 16 | 31 | 10 | 19 | 15 |
| CCR, wt.% | 16.00 | 13.55 | 14.44 | 16.61 | 14.22 |
| Asphaltenes, wt.% | 8.52 | 5.40 | --- | 4.73 | 5.84 |
| Vanadium Removal, % | 0 | 38 | 49 | 62 | 57 |
| Asphaltene Removal, % | 22 | 51 | --- | 57 | 47 |
| Sulfur Removal, % | 12 | 36 | 36 | 43 | 41 |
| CCR Removal, % | 6 | 20 | 15 | 2 | 16 |

### Example 6

As a further comparison of the performance of the catalyst of the invention, a cobalt and molybdenum-containing magnesia-alumina-aluminum phosphate catalyst, prepared according to Example 6 of our US Patent Application No. 938476 (Mobil Docket F-3762), was tested in the shaker bonb with the same feedstock as used in Example 5. Properties of this catalyst are shown in Table 5

Performance results of the magnesia-alumina-aluminum phosphate catalyst in the test are shown in the following Table 6, along with the results obtained above for the present process. The shaker bomb experiments were again conducted at an oil/catalyst weight ratio of 20/l, a temperature of about 400° (750°F), and a hydrogen pressure of about 14,000kPa (2000 psig), with reaction time controlled to be 80 minutes.

## TABLE 5

### CoMo/Magnesia-Alumina-Aluminum Phosphate
### Resid Demetallation Catalyst Properties

| Metal Loading, wt.% | |
|---|---|
| MoO₃ | 10.0 |
| CoO | 3.5 |
| Surface Area, $m^2/g$ | 131 |

**Pore Size Distribution of Support**
**%Pore Volume in Pores of**

| | |
|---|---|
| 0-30 Angstrom, Diameter | 0 |
| 30-50   $(10^{-10} m)$ | 0 |
| 50-100 | 2.5 |
| 100-150 | 7.4 |
| 150-200 | 12.8 |
| 200-400 | 61.6 |
| 400-600 | 15.7 |

TABLE 6

Comparison of Resid Upgrading CoMo-Impregnated Catalyst Performance

| Catalyst Support | Previous Example 6 Magnesia-Alumina-Aluminum Phosphate | Example 1 | Example 2 |
|---|---|---|---|
| Mesh Size | 14-30 | 14-30 | 14-30 |
| Liquid Product Analysis | | | |
| Hydrogen, wt.% | 10.85 | 12.03 | 11.09 |
| Sulfur, wt.% | 2.70 | 2.25 | 2.31 |
| Nitrogen, wt.% | 0.28 | 0.27 | 0.24 |
| Vanadium, ppm | 25 | 25 | 28 |
| Nickel, ppm | 21 | 19 | 15 |
| CCR, wt.% | 15.28 | 16.61 | 14.22 |
| Asphaltenes, wt.% | 5.50 | 4.73 | 5.84 |
| Vanadium Removal, % | 62 | 62 | 57 |
| Asphaltene Removal, % | 50 | 57 | 47 |
| Sulfur Removal, % | 31 | 43 | 41 |
| CCR Removal, % | 10 | 2 | 16 |

At equivalent mesh sizes, the CoMo-impregnated catalysts of the present invention had greater sulfur removal activity than the CoMo-impregnated magnesia-alumina-aluminum phosphate catalyst of Example 6 of our previous application (43% and 41% vs 31%) at about the same demetalation activity (62% and 57% vs 62%).

**Claims**

1. A refractory composition comprising an amorphous, solid, combination of a rare earth oxide, aluminum oxide and aluminum phosphate having, after calcination, a surface area of 50 $m^2$/g to 500 $m^2$/g, a pore volume of 0.3 cc/g to 1.5 cc/g, and Equilibrium Sorption capacities greater than about 10 wt.% for water vapor, greater than 6 wt.% for cyclohexane vapor and greater than 5 wt.% for n-hexane vapor, said rare earth oxide, aluminum oxide and aluminum phosphate being present in the refractory composition in the weight ratios of 10:20:70 to 90:5:5.

2. The composition of claim 1 wherein said rare earth comprises lanthanum.

3. The composition of any preceding claim wherein said surface area is from 100 $m^2$/g to 250 $m^2$/g, and said pore volume is from 0.5 gg/g to 1 cc/g.

4. The composition of any preceding claim wherein said rare earth oxide, aluminum oxide and aluminum phosphate are present in the weight ratios of 25:20:55 to 30:25:45.

5. The composition of any preceding claim having a pore size distribution, following calcination, of 5 vol.% to 20 vol.% within the pore size diameter range of 50 to 100 x $10^{-10}$m, from 10 vol.% to 35 vol.% within the pore size diameter range of 100 to 150 x $10^{-10}$m, from 15 vol.% to 50 vol.% within the pore size diameter range of 150 to 200 x $10^{-10}$m and from 10 vol.% to 50 vol.% within the pore size diameter range of 200 to 400 x $10^{-10}$m.

6. A method for synthesizing a refractory composition comprising an amorphous, solid, combination of a rare earth oxide, aluminum oxide and aluminum phosphate comprising the steps of:

(i) preparing a first solution comprisinag a source of aluminum, a source of a rare earth metal and phosphoric acid, said souces of aluminum and rare earth metal being dissolved in polar solvent medium, said phosphoric acid being in solution with water, and said first solution containing from 0.1 to 10 wt.% aluminum, from 0.1 to 10 wt. % rare earth metal and from 0.2 to 5 wt.% phosphorus,

(ii) preparing a second basic solution having pH from 10 to 14,

(iii) mixing said first and second solutions together with agitation while maintaining the pH at from 8 to 12, and

(iv) recovering the precipitate formed during said mixing step (iii).

7. A catalyst composition comprising the refractory composition of any one of claims 1 to 5 and from 5 to 50 wt.% of natural or synthetic zeolite.

8. A catalyst composition comprising the refractory composition of any one of claims 1 to 5 and a catalytic metal selected from Groups IIIB, IVB, VB, VIB, VIIB and VIII of the Periodic Table of Elements, copper, zinc and combinations thereof.

9. A process for upgrading petroleum residua feedstock which comprises contacting said feedstock under hydrotreating conditions with hydrogen and a catalyst composition comprising a catalytic component selected from the group consisting of metals of groups IIIB, IVB, VB, VIB, VIIB and VIII of the Periodic Table of Elements, copper, zinc and combinations thereof, and a catalyst support comprising the refractory composition of any one of claims 1 to 5.


**Patentansprüche**

1. Feuerfeste Zusammensetzung, die eine amorphe feste Kombination aus einem Oxid der Seltenen Erden, Aluminiumoxid une Aluminiumphosphat mit einer spezifischen Oberfläche nach der Kalzinierung von 50 m²/g bis 500 m²/g, einem Porenvolumen von 0,3 cm³/g bis 1,5 cm³/g und einer Gleichgewichts-Sorptionskapazität von mehr als etwa 10 Gew.-% für Wasserdampf, mehr als 6 Gew.-% für Cyclohexendampf und mehr als 5 Gew.-% für n-Hexandampf umfaßt, wobei das Oxid der Seltenen Erden, das Aluminiumoxid und das Aluminiumphophat in der feuerfesten Zusammensetzung in einem Gewichtsverhältnis von 10:20:70 bis 90:5:5 vorhanden sind.

2. Zusammensetzung nach Anspruch 1, worin die Seltenen Erden Lanthan sind.

3. Zusammensetzung nach einem der vorstehenden Ansprüche, worin die spezifische Oberfläche von 100 m²/g bis 250 m²/g und das Porenvolumen von 0,5 cm³/g bis 1 cm³/g betragen

4. Zusammensetzung nach einem der vorstehenden Ansprüche, worin das Oxid der Seltenen Erden, das Aluminiumoxid und das Aluminiumphosphat in einem Gewichtsverhältnis von 25:20:55 bis 30:25:45 vorhanden sind.

5. Zusammensetzung nach einem der vorstehenden Ansprüche mit einer Porengrößenverteilung nach der Kalzinierung von 5 Vol.-% bis 20 Vol.-% im Durchmesserbereich der Porengröße von 50 bis 100x10⁻¹⁰ m, von 10 Vol.-% bis 35 Vol.-% im Durchmesserbereich der Porengröße von 100 bis 150x10⁻¹⁰ m, vom 15 Vol.-% bis 50 Vol.-% im Durchmesserbereich der Porengröße von 150 bis 200x10⁻¹⁰ m und von 10 Vol.-% bis 50 Vol.-% im Durchmesserbereich der Porengröße von 200 bis 400x10⁻¹⁰ m.

6. Verfahren zur Synthese einer feuerfesten Zusammensetzung, die eine amorphe feste Kombination aus einem Oxid der Seltenen Erden, Aluminiumoxid und Aluminiumphosphat umfaßt, welches die Schritte umfaßt:

(i) Herstellung einer ersten Lösung, die eine Quelle von Aluminium, eine Quelle eines Metalls der Seltenen Erden und Phosphorsäure umfaßt, wobei die Quellen von Aluminium und dem Metall der Seltenen Erden in einem polaren Lösungsmittelmedium gelöst sind, wobei die Phosphorsäure in einer Lösung mit Wasser vorliegt, und die erste Lösung von 0,1 bis 10 Gew.-% Aluminium von 0,1 bis 10 Gew.-% des Metalls der Seltenen Erden und von 0,2 bis 5 Gew.-% Phosphor enthält,

(ii) Herstellung einer zweiten basischen Lösung mit einem pH-Wert von 10 bis 14,

(iii) Vermischen zwischen der ersten und zweiten Lösung unter Rühren, wobei der pH-Wert von 8 bis 12 gehalten wird, und

(iv) Gewinnung des im Vermischungsschritt (iii) gebildeten Biederschlags.

7. Katalysatorzusammensetzung, die die feuerfeste Zusammensetzung nach einem der Ansprüche 1 bis 5 und von 5 bis 50 Gew.-% eines natürlichen oder synthetischen Zeoliths umfaßt.

8. Katalysatorzusammensetzung, die die feuerfeste Zusammensetzung nach einem der Ansprüche 1 bis 5 und ein katalytisches Metall umfaßt, das aus den Gruppen IIIB, IVB, VB, VIB, VIIB und VIII des Periodensystems der Elemente, Kupfer, Zink und Kombinationen davon ausgewählt ist.

9. Verfahren zur Qualitätsverbesserung eines Erdölrückstands-Ausgangsmaterials, das den Kontakt dieses Ausgangsmaterials bei Hydrobehandlungsbedingungen mit Wasserstoff und einer Katalysatorzusammensetzung umfaßt, die eine Katalytische Komponente, die aus der Gruppr ausgewählt ist, die aus Metallen der Gruppen IIIB, IVB, VB, VIB, VIIB und VIII des Periodensystems der Elemente, Kupfer, Zink und Kombinationen davon ausgewählt ist und einen Katalysatorträger umfaßt, der die feuerfeste Zusammensetzung nach einem der Ansprüche 1 bis 5 umfaßt.

**Revendications**

1. Une composition réfractaire à base d'une combinaison amorphe, solide d'oxyde de terres rares, d'oxyde d'aluminium et de phosphate d'aluminium, présentant, après calcination, une aire interfaciale de l'ordre de 50 à 500 m2/g, un volume poreux de l'ordre de 0,3 à 1,5 cm3/g, et des capacités de sorption à l'équilibre supérieures à environ 10% en poids pour la vapeur d'eau, supérieure à 6% en poids pour la vapeur de cyclohexane et supérieures à 5% en poids pour la vapeur de n-hexane, lesdits oxyde de terres rares, oxyde d'aluminium et phosphate d'aluminium étant présents dans la composition réfractaire dans des rapports pondéraux de 10/20/70 à 90/5/5.

2. La composition selon la revendication 1, caractérisée en ce que lesdites terres rares comprennent du lanthane.

3. La composition selon l'une quelconque des revendications précédentes, caractérisée en ce que ladite aire interfaciale est de l'ordre de 100 à 250 m2/g, et ledit volume poreux est de l'ordre de 0,5 à 1 cm3/g.

4. La composition selon l'une quelconque des revendications précédentes, caractérisée en ce que lesdits oxyde de terres rares, oxyde d'aluminium et phosphate d'aluminium sont présents dans des rapports pondéraux de 25/20/55 à 30/25/45.

5. La composition selon l'une quelconque des revendications précédentes, dont le volume des pores après calcination répond à la distribution suivante: de 5 à 20% en volume dans la gamme de diamètres de pores compris entre 50 et $100 \times 10^{-10}$ m, de 10 à 35% en volume dans la gamme de diamètres de pores compris entre 100 est $150 \times 10^{-10}$ m, de 15 à 50% en volume dans la gamme de diamètres de pores compris entre 150 et $200 \times 10^{-10}$ m et de 10 à 50% en volume dans la gamme de diamètres de pores compris entre 200 et $400 \times 10^{-10}$ m.

6. Un procédé de synthèse d'une composition réfractaire à base d'une combinaison amorphe et solide d'oxyde de terres rares, d'oxyde d'aluminium et de phosphate d'aluminium comprenant les étapes suivantes:

(1) préparation d'une première solution à base d'une source d'aluminium, d'une source d'un métal de terres rares et d'acide phosphorique, lesdites sources d'aluminium et de métal de terres rares étant dissoutes dans un milieu solvant polaire, ledit acide phosphorique étant en solution avec l'eau, et ladite première solution contenant de 0,1 à 10% en poids d'aluminium, de 0,1 à 10% en poids de métal de terres rares et de l'ordre de 0,2 à 0,5% en poids de phosphore;

(2) préparation d'une seconde solution basique dont le pH est de 10 à 14;

(3) le mélange desdites première et seconde solutions ensemble sous agitation en maintenant le pH entre 8 et 12, et

(4) récupération du précipitat formé au cours de ladite étape de mélange (3).

7. Une composition catalytique à base de la composition réfractaire selon l'une quelconque des revendications 1 à 5 et de 5 à 50% en poids d'une zéolite naturelle ou synthétique.

8. Une composition catalytique à base de la composition réfractaire selon l'une quelconque des revendications 1 à 5 et d'un métal catalytique choisi parmi les organes IIIB, IVB, VB, VIB, VIIB et VIII du Tableau Périodique des Eléments, tels que cuivre, zinc et leurs combinaisons.

9. Un procédé d'amélioration des charges résiduelles de pétrole consistant à mettre en contact ladite charge dans des conditions d'hydrotraitement avec l'hydrogène et une composition catalytique à base d'un composant catalytique choisi dans le groupe comprenant les métaux des groupes IIIB, IVB, VB, VIB, VIIB et VIII du Tableau Périodique des Eléments, tels que le cuivre, zinc et leurs combinaisons, et un support catalytique à base de la composition réfractaire selon l'une quelconque des revendications 1 à 5.